Europäisches Patentamt

European Patent Office

Office européen des brevets

(19)

(11) Publication number: 0 410 331 A2

# EUROPEAN PATENT APPLICATION

(21) Application number: 90114001.2

(22) Date of filing: 21.07.90

(51) Int. Cl.⁵: G01M 1/22

(30) Priority: 28.07.89 JP 197372/89

(43) Date of publication of application:
30.01.91 Bulletin 91/05

(84) Designated Contracting States:
DE FR GB

(71) Applicant: NAGAHAMA SEISAKUSHO LTD.
24-3, Miyatacho 1-chome
Takatsuki, Osaka(JP)

(72) Inventor: Ono, Kyosuke
27-4 Nanyodai 2-chome
Hachioji, Tokyo(JP)
Inventor: Kyogoku, Yoshiaki
11-9, Nakamiya 3-chome, Asahi-ku
Osaka(JP)

(74) Representative: Brandt, Ernst-Ulrich
Fa. Carl Schenck AG Patentabteilung
Landwehrstrasse 55 Postfach 40 18
D-6100 Darmstadt 1(DE)

(54) Dynamic balancing machine utilizing torsional vibration.

(57) The invention relates to a dynamic balancing machine utilizing torsional vibration, comprising holding means for holding a specimen in relation of being rotatable and vibratable, drive means for torsionally vibrating within a predetermined angle, vibration detecting means for detecting unbalance vibration in at least two different angular phases generated at said specimen when torsionally vibrated, angular signal output means for outputting an angular signal each time said specimen rotates at a predetermined microangle, and computation means for computing an unbalance angle and an unbalance amount of said specimen on the basis of said unbalance vibrations at said two different angular phases detected by said vibration detecting means and of said angular signal output means.

Fig. 1A

# DYNAMIC BALANCING MACHINE IN WHICH TORSIONAL EXCITATION IS UTILIZED

## DETAILED DESCRIPTION OF THE INVENTION

### Field of Industrial Utilization

The present invention relates to a dynamic balancing machine, and more particularly to a dynamic balancing machine in which torsional excitation is utilized.

### Prior Art

In order to measure the unbalance of an object to be examined for unbalance (hereinafter called a "rotor"), it is most common either to measure unbalance force caused by the revolution of the rotor or to measure vibration caused by the unbalance of the rotor during its revolution.

### Problems To Be Solved by the Invention

As the case may be, it is dangerous to revolve the rotor for the purpose of measuring the unbalance.

For example, when the revolution speed of the rotor approaches a critical speed, vibration caused by unbalance becomes so violent that occasionally the rotor flies out of its supporting members. Especially, for the purpose of measuring the unbalance of a flexible rotor, the rotor has to be revolved at a higher revolution speed than the primary critical speed. A flexible rotor revolved at such a high revolution speed is attended with a high accident frequency rate.

A theory recently published by Kyosuke Ono in Vol. 50, No. 458 (October 1984) of the Journal of the Japan Society of Mechanical Engineers is based on an entirely different concept from the conventional method in which a rotor has had to be revolved for the purpose of measuring the unbalance.

According to Ono, a hint on this theory was given by the fact that the bending vibration which occurs when a flexible rotor is revolved at the secondary critical speed is caused by a change in torque or a change in the angle of rotation. Major points of this theory can be outlined as follows:

1. Unblalnce vibration caused by torsional excitation can be allowed to occur by periodically changing the direction in which driving torque is exerted on the rotor.

2. Unbalance vibration caused by torsional excitation occurs in the direction perpendicular to an unbalance vector which would occur if the rotor were revolved. The amplitude of this unbalance vibration is proportional to the amount of unbalance and the amplitude of torsion.

The correctness of this theory was supported by the results of experiments made by Ono and Yasuhiko Nakayama (see Vol. 50, No. 508 (December 1988) of the Journal (Book C) of the Japan Society of Mechanical Engineers, pp 2859-2865).

The present invention is concerned with the application of this theory to a conventional dynamic balancing machine.

It is an object of the present invention to provide a dynamic balancing machine adapted to vibrate a rotor by torsional excitation caused by positively changing the direction in which driving torque is exerted on the rotor.

### Means for Solving the Problems

The dynamic balancing machine in accordance with the present invention includes a means for holding a rotor in such a manner that the rotor is adapted to revolve and vibrate, a driving means for subjecting the rotor to torsional excitation within the limits of a prescribed angle of torsion, and a means for detecting unbalance vibration which occurs when the rotor is subjected to torsional excitation, the detection being effected at least in two angular positions in the direction of rotation of the rotor, a means for generating a reference signal every time the rotor has rotated by a very small prescribed angle, and a calculating means in which the amount and angular position of dynamic unbalance of the rotor is calculated on the basis of unbalance vibration detected in two angular positions by the means for detecting unbalance vibration on one hand and on the basis of the reference signal outputted from the means for generating a reference signal on the other hand.

The means for detecting unbalance vibration can detect unbalance vibration in arbitrary angular positions which are away from each other by 90°.

The driving means fulfills another function as a means for revolving the rotor and includes a change-over means for making a switchover from the function as a means for revolving the rotor to the function as a means for subjecting the rotor to torsional excitation within the limits of a prescribed angle of torsion and vice versa. The change-over means is also capable of subjecting the rotor to torsional excitation while revolving the rotor.

The driving means further includes an excitation frequency changer from which a desired excitation frequency can be taken, a memory in which angles of excitation are stored beforehand, and a servo output unit in which the output taken from the excitation frequency changer is made either into a sine wave or into a chopping wave on the basis of data supplied from the memory.

The driving means further includes a rotating shaft for revolving the rotor, a first cam attached to the rotating shaft, a second cam attached to a journal of the rotor, and a connecting member by which the first cam is connected to the second cam in such a manner that the distance from the center of revolution of the first cam to the point at which one end of the connecting member is pivotally connected to the first cam is shorter than the distance from the center of revolution of the second cam to the point at which the other end of the connecting member is pivotally connected to the second cam.

The driving means may further include a hydraulic motor.

Function

Unbalance vibration caused by torsional excitation occurs when the direction in which driving torque is exerted on the rotor is positively changed.

Unbalance vibration detected by the means for detecting unbalance vibration has a direction perpendicular to an unbalance vector which would occur if the rotor were revolved. The amplitude of this unbalance vibration is proportional to the amount of unbalance. Therefore, if the unbalance vibration of a rotor is detected at least in two angular positions, this is tantamount to the detection of two components into which the unbalance of the rotor has been resolved.

In the calculating means, the two components of unbalance of the rotor are compounded, and the amount and angular position of the unbalance are calculated on the basis of the reference signal outputted from the means for generating a reference signal.

Embodiments

The basic principle and preferred embodiments of the present invention are hereinafter described with reference to the accompanying drawings.

Reference will first be specifically made to the basic principle.

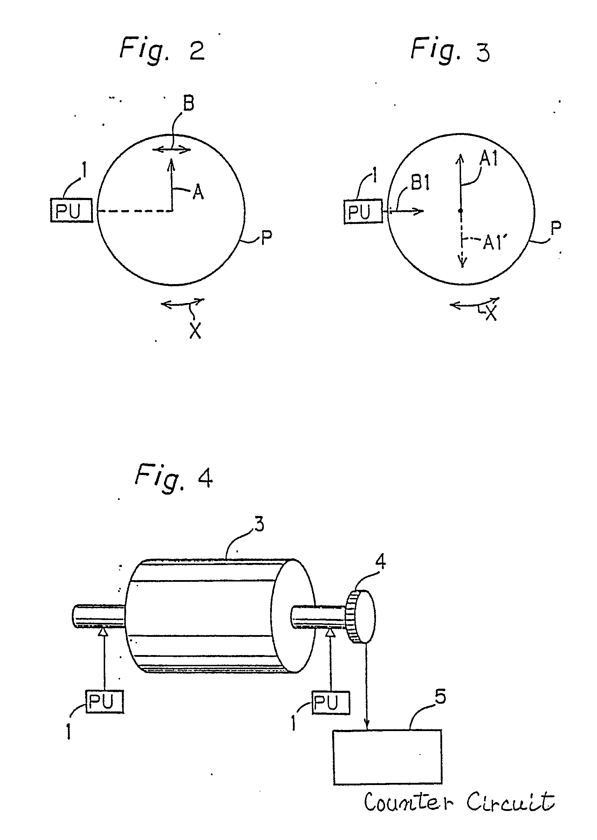

Let it be supposed that a component A (Fig. 2) of unbalance exists in a balancing plane P. When the balancing plane P is subjected to torsional excitation as shown with an arrow X, vibration B occurs in the direction perpendicular to the direction of the component A of unbalance. The vibration B can be detected by a pickup 1, which is angularly away by 90° from the direction of the component A of unbalance.

Conversely speaking, if a pickup 1 disposed in an arbitrary position detects vibration B1 (Fig. 3) under the condition that the balancing plane P is subjected to torsional excitation, a component A1 or A1$'$ of unbalance which has a direction perpendicular to the vibration B1 is assumed to exist in the balancing plane P.

When the balancing plane P is subjected to torsional excitation in a direction just as a right handed screw is threaded into a tapped hole, the vibration B1 caused by such torsional excitation occurs, e.g., in the positive direction (i.e., in the direction which allows the balancing plane P to recede from the pickup 1) and, when the balancing plane P is subjected to torsional excitation in a direction just as a left handed screw is threaded into a tapped hole, the vibration B1 caused by such torsional excitation occurs, e.g., in the negative direction (i.e., in the direction which allows the balancing plane P to come close to the pickup 1). Of course, there may be a reverse relation between the direction of torsional excitation and the direction of vibration B1. In either case, a mere lookout for the direction of vibration B1 is enough to discriminate between A1 and A1$'$.

Reference will now be specifically made to a method of discriminating between A1 and A1$'$.

As shown in Fig. 4, an encoder 4 is directly attached to a rotor 3 to be subjected to torsional excitation and is connected to a counter circuit 5. The construction of this circuit is such that pulse signals outputted from the encoder 4 cause the counter to read up when the rotor 3 is subjected to excitation in a direction just as a right handed screw is threaded into a tapped hole as viewed from the side of the encoder 4, and cause the counter to count down when the rotor 3 is subjected to excitation in the opposite direction.

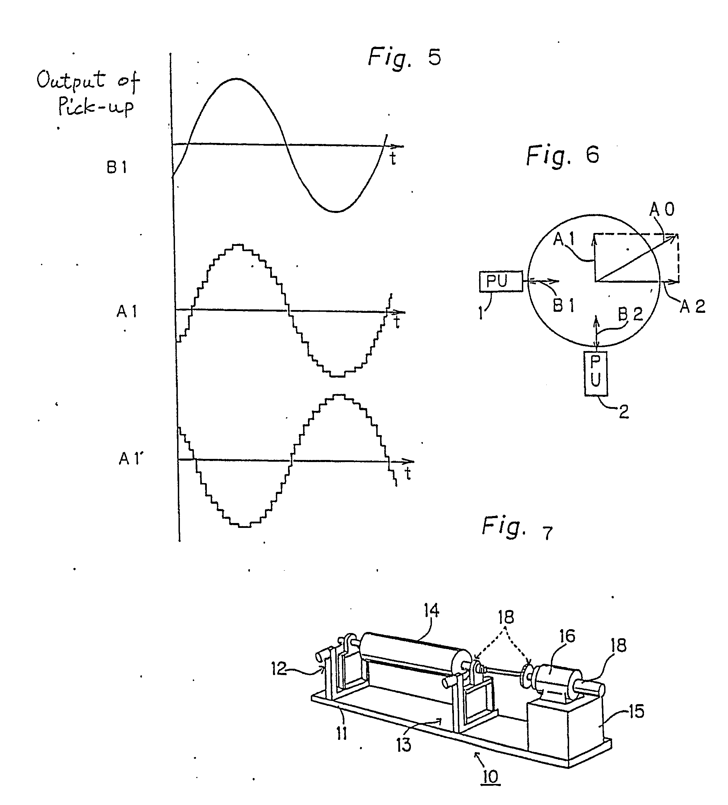

When the excitation frequency is lower than the resonance frequency of the rotor 3 (and of support bearing stands therefor), the component A1 of unbalance, if it exists, is represented by a wave form A1 shown in Fig. 5, which is a graphical representation of the outputs taken from the counter circuit 5, while the component A1$'$ of unbalance, if it exists, is represented by a wave form A1$'$

likewise shown in Fig. 5, which is also a graphical representation of the outputs taken from the counter circuit 5. Therefore, a discrimination between the component A1 and the component A1' of unbalance can be made by checking whether the outputs taken from the counter circuit 5 are in or out of phase with the outputs taken from the pickup 1.

The point at which a zero output is taken from the pickup 1 is the angular position of unbalance measured by the pickup 1 as existing in the rotor 3.

When the excitation frequency exceeds the resonance frequency of supporting springs, the output from the pickup 1 undergoes a phase shift by 180°, which gives rise to the necessity of reversing the above-mentioned criterion for the discrimination between the component A1 and the component A1' of unbalance. In view of this necessity, one should not be negligent in paying attention to the excitation frequency as compared with the resonance frequency of supporting springs.

The following description is based on the assumption that the excitation frequency is lower than the resonance frequency of the rotor.

In ordinary cases, the component A1 or A1' of unbalance detected by the pickup 1 and assumed to have a direction perpendicular to the vibration B1 merely represents one of two component vectors into which an unbalance vector $A_o$ (Fig. 6) existing in the balancing plane P can be resolved. This is because the pickup 1 is not always disposed in an angular position which is exactly away from the unbalance vector $A_o$ by 90° but is disposed in an arbitrary angular position.

In order to detect the unbalance vector $A_o$ existing in the balancing plane P, vibration B1 and B2 caused by torsional excitation are detected by means of pickups 1 and 2 disposed in arbitrary angular positions (which are preferably away from each other by 90°) as shown in Fig. 6. Then, components A1 and A2 of the unbalance, which correspond to the vibration B1 and B2 respectively, are found and combined vectorially with each other to yield the unbalance vector $A_o$ in the balancing plane P.

The following description is presented with reference to the embodiments of the present invention which are presently preferred for the purpose of concrete explanation.

The present invention can be applied to either of the horizontal and vertical type dynamic balancing machines.

The rotor may be directly driven by a driving motor. Alternatively, driving torque developed by the driving motor may be transmitted to the rotor through a belt transmission.

The means for holding a rotor may be capable of vibrating the rotor only in a single direction so as to allow the rotor to have only one degree of freedom. Alternatively, the means for holding a rotor may be capable of vibrating the rotor in two directions so as to allow the rotor to have two degrees of freedom.

In case where the rotor is allowed to have only one degree of freedom, vibration has only to be detected in a single direction by means of at least one pickup. In case where the rotor is allowed to have two degrees of freedom, vibration has only to be detected in two directions by means of at least two pickups.

Thus the present invention can be applied to various known types of dynamic balancing machines.

A feature common to all cases where the present invention is applied to a known type of dynamic balancing machines is that a means, such as an encoder, for detecting the angle of rotation is attached to a journal of the rotor and that the driving motor is capable of subjecting the rotor to torsional excitation. Reference to the construction embodying this feature will be made later.

A short account of some embodiments of the present invention will be given hereunder.

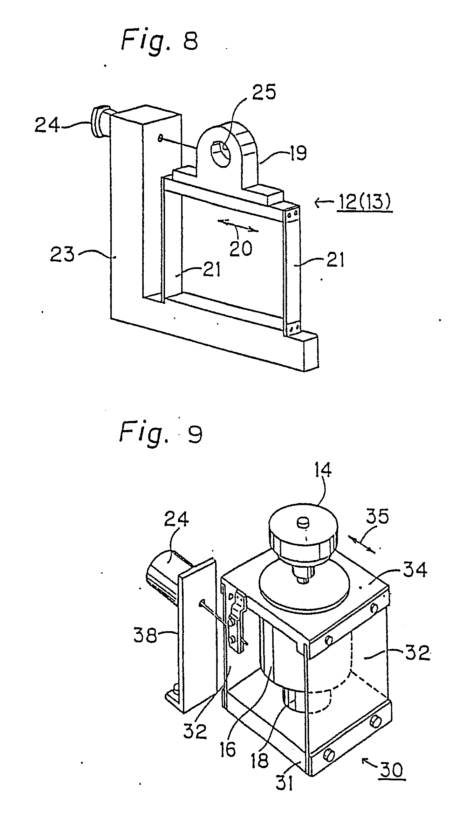

Fig. 7 is a perspective view of a horizontal type dynamic balancing machine embodying the present invention. Fig. 8 is a perspective view of a measuring stand used therein.

The horizontal type dynamic balancing machine 10 includes two measuring stands 12 and 13 disposed on a machine base 11. Both ends of a rotor 14 are held by the measuring stands 12 and 13, and the measurement of unbalance can be carried out in two balancing planes of the rotor 14.

It is preferable to make the space between the measuring stands 12 and 13 adjustable so as to adapt the measuring stands 12 and 13 for various rotors 14 different in length from each other. The adjustability of the space is attained if at least one of the measuring stands 12 and 13 is made movable along the machine base 11.

The machine base 11 carries a mount 15 for a driving motor 16. For directly driving the rotor 14, the rotating shaft of the driving motor 16 is coupled with a journal of the rotor 14 through a joint 17.

The direction in which the driving torque of the driving motor 16 is exerted on the rotor 14 is periodically changed so as to subject the rotor 14 to torsional excitation at a prescribed amplitude.

An encoder 18 attached to the rotating shaft of the driving motor 16 generates a pulse every time the rotating shaft has rotated by a very small prescribed angle. As already mentioned with reference to Fig. 4, the angle at which the rotor 14 has been subjected to torsional excitation is detected on the basis of the number of pulses generated by the encoder 18 and fed to an up-down counter.

The measuring stands 12 and 13 are identical in construction. As shown in Fig. 8, each of them includes a bearing member 19 having a hole 25 for receiving a journal of the rotor 14, a pair of flat springs 21 holding the bearing member 19 in such a manner that the bearing member 19 is adapted to vibrate only in a single direction 20 so as to have only one degree of freedom, and a vibration pickup 24 mounted on a supporting member 23 and adapted to detect vibration when the bearing member 19 vibrates in the direction 20.

Each journal of the rotor may be supported by a pair of rollers instead of being supported by the bearing member 19 having the hole 25.

Fig. 9 is a perspective view of a vertical type dynamic balancing machine embodying the present invention.

The vertical type dynamic balancing machine 30 includes a pair of flat springs 32 extending vertically from a machine base 31 and holding a vibrating frame 34, which is thereby adapted to vibrate only in a single direction 35 so as to have only one degree of freedom.

The driving motor 16 is mounted on the undersurface of the vibrating frame 34. A portion of the rotating shaft of the driving motor 16 projects upwardly from the upper surface of the vibrating frame 34. The rotor 14 mounted on the abovementioned portion of the rotating shaft is directly driven by the driving motor 16. The direction in which the driving torque of the driving motor 16 is exerted on the rotor 14 is periodically changed so as to subject the rotor 14 to torsional excitation at a prescribed amplitude. An encoder 18 attached to the lower portion of the rotating shaft of the driving motor 16 generates a pulse every time the rotating shaft has rotated by a very small prescribed angle. A vibration pickup 24 mounted on a supporting member 38 is adapted to detect vibration when the frame 34 vibrates.

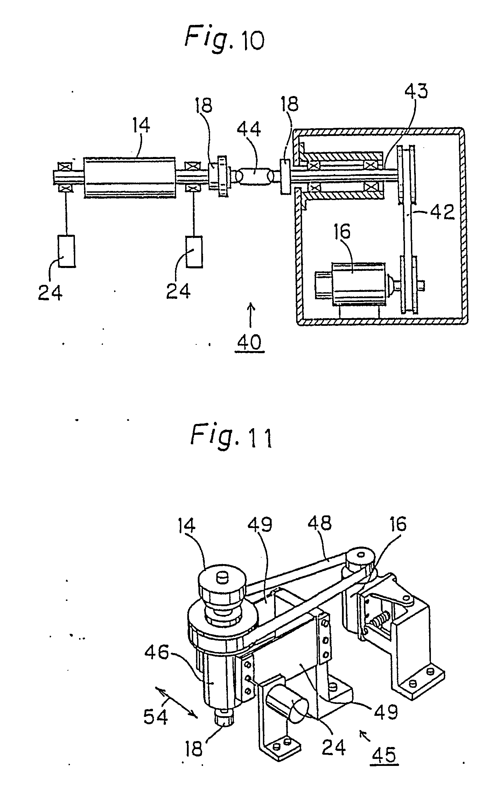

Fig. 10 is a schematic illustration to help explain the contruction of another horizontal type dynamic balancing machine embodying the present invention.

The rotor 14 mounted on the horizontal type dynamic balancing machine 40 is not directly driven by the driving motor 16, but the driving torque of the driving motor 16 is transmitted to an intermediate shaft 43 through a belt 42. Thus the rotor 14, which is coupled with the intermediate shaft 43 through a joint 44, is indirectly driven. The encoder 18 is attached to the intermediate shaft 43.

Except the vibration pickups 24, the measuring stands are not shown, because they do not constitute a characteristic feature of this embodiment.

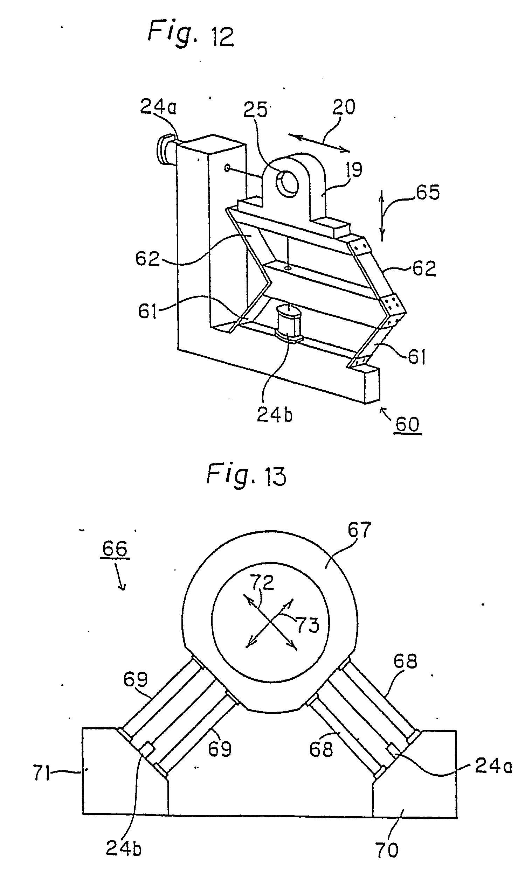

Fig. 11 is a perspective view of another vertical type dynamic balancing machine embodying the present invention.

The rotor 14 mounted on the vertical type dynamic balancing machine 45 is not directly driven by the driving motor 16, but the driving torque of the driving motor 16 is transmitted to a spindle unit 46 through a belt 48. The rotor 14 mounted on the spindle unit 46 is indirectly driven thereby.

A pair of flat springs 49 hold the spindle unit 46, which is thereby adapted to vibrate only in a single direction 54 so as to have only one degree of freedom. The vibration of the spindle unit 46 is detected by the vibration pickup 24.

The encoder 18 is attached to the spindle unit 46.

Fig. 12 is a perspective view of a measuring stand used in another horizontal type dynamic balancing machine embodying the present invention.

The measuring stand 60, which can take the place, e.g., of the measuring stands 12 and 13 shown in Fig. 7, includes a pair of flat springs 61 and another pair of flat springs 62. These two pairs of flat springs form a pair of doglegged spring assemblies, which hold the bearing member 19 in such a manner that the bearing member 19 is adapted to vibrate in two directions 20 and 65 so as to have two degrees of freedom. Vibration in the direction 20 is detected by a vibration pickup 24a, while vibration in the direction 65 is detected by a vibration pickup 24b.

As a means for supporting each journal of the rotor, the applicability of a pair of rollers in place of the bearing member 19 having the hole 25 holds true for this measuring stand as well.

Fig. 13 is a view illustrating another example of a measuring stand which also allows the bearing member to have two degrees of freedom. The measuring stand 66 includes a pair of compression springs 68 and another pair of compression springs 69. These two pairs of compression springs 68 and 69 are angularly disposed away from each other so as to hold a bearing member 67 in such a manner that the bearing member 67 is adapted to vibrate in two directions 72 and 73 so as to have two degrees of freedom. The lower ends of the compression springs 68 and 69 are secured to base members 70 and 71 respectively. Vibration in the direction 72 is detected by a vibration pickup 24a disposed between the compression springs 68, while vibration in the direction 73 is detected by a vibration pickup 24b disposed between the compression springs 69.

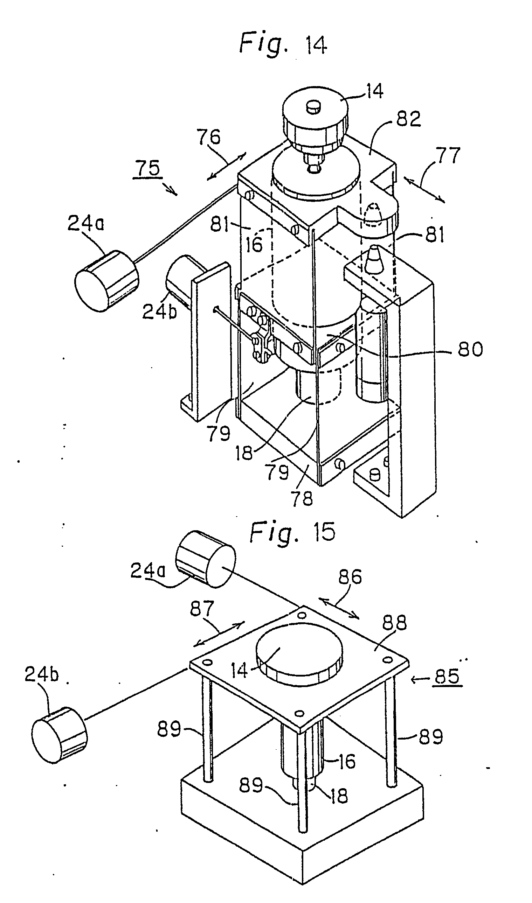

Fig. 14 is a perspective view of another vertical type dynamic balancing machine embodying the present invention.

The vibrating frame and the intermediate frame of the vertical type dynamic balancing machine 75 are adapted to vibrate in their respective directions 76 and 77 so as to have two degrees of freedom altogether. Vibration in the direction 76 is detected by a vibration pickup 24a, while vibration in the direction 77 is detected by a vibration pickup 24b.

To put it concretely, a pair of flat springs 79 extend vertically from a machine base 78 and hold the intermediate frame 80, which is thereby adapted to vibrate in the direction 77. Another pair of flat springs 81 disposed perpendicularly to the flat springs 79 extend vertically from the intermediate frame 80 and hold the vibrating frame 82, which is thereby adapted to vibrate in the direction 76.

The driving motor 16 is mounted on the undersurface of the vibrating frame 82. An encoder 18 is attached to the lower portion of the rotating shaft of the driving motor 16. A portion of the rotating shaft of the driving motor 16 projects upwardly from the upper surface of the vibrating frame 82. The rotor 14 is mounted on the above-mentioned portion of the rotating shaft so as to be subjected to torsional excitation by the driving motor 16.

Fig. 15 is a perspective view of another vertical type dynamic balancing machine embodying the present invention. The vibrating frame of the vertical type dynamic balancing machine 85 is adapted to vibrate in two directions 86 and 87 so as to have two degrees of freedom.

To put it concretely, the vibrating frame 88 is substantially square with four corners supported by four compression springs 89 in such a manner that the vibrating frame 88 is adapted to vibrate.

The parts other than those which have just been mentioned in the preceding paragraph have an identical construction with the corresponding parts in Fig. 14 and, therefore, like numerals are employed to designate these parts and explanations for them are omitted unless otherwise needed.

Reference will now be specifically made to a suitable electrical circuit by means of which a dynamic balancing machine embodying the present invention can be made to operate.

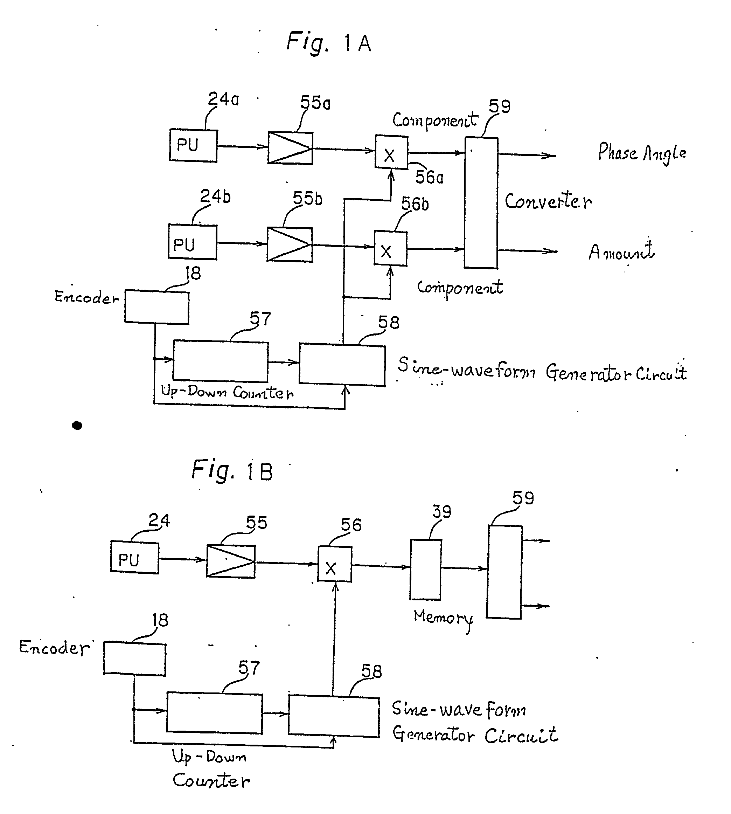

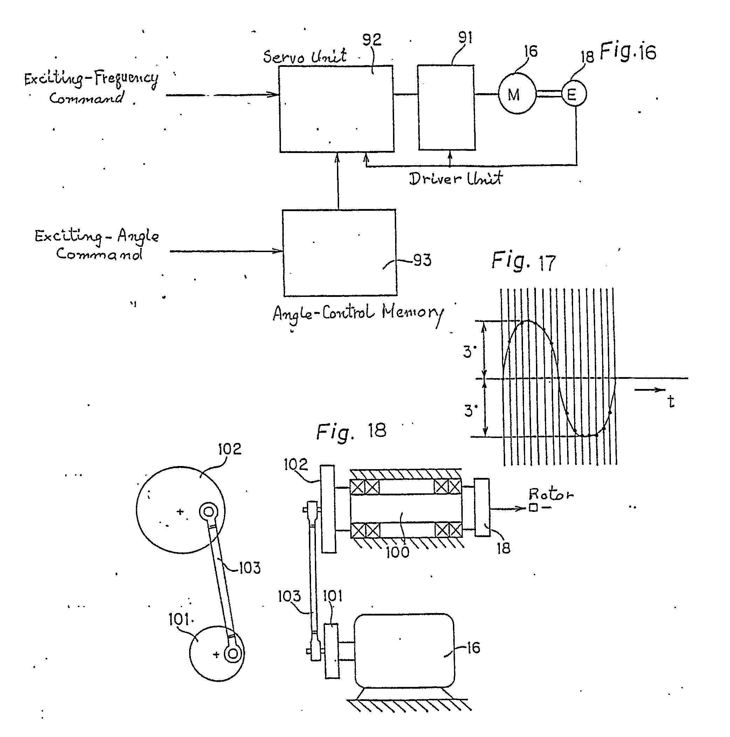

Fig. 1A is a diagrammatic view of an unbalance measuring circuit for a dynamic balancing machine which allows the rotor to have two degrees of freedom, while Fig. 18 is a diagrammatic view of an unbalance measuring circuit for a dynamic balancing machine which allows the rotor to have only one degree of freedom.

Referring now to Fig. 1A, the output taken from the vibration pickup 24a is amplified in an amplification circuit 55a and fed to a multiplication circuit 56a. Likewise, the output taken from the vibration pickup 24b is amplified in an amplification circuit 55b and fed to a multiplication circuit 56b.

Output pulses generated by the encoder 18 are fed to an up-down counter 57.

The encoder 18 is capable of producing the outputs with three phases. Outputs in phases A and B consist respectively of, e.g., 360 pulses per revolution. The encoder 18 is further capable of producing an output with phase Z, in which a pulse per revolution is outputted. Output pulses in phase A have a phase difference of 90° to those in phase B. This phase difference gives a clue to the discrimination between RRC and RLC of the encoder 18.

When the rotor 14 is excited, there is an alternation of pulses representing RRC and those representing RLC in the output taken at a fixed amplitude from the encoder 18 attached to a journal of the rotor 14. The pulse recurrence frequency is in tune with the excitation frequency of the rotor 14.

Output pulses from the encoder 18 cause the up-down counter 57 to read up or count down. For example, the up-down counter 57 reads up in case of RRC of the encoder 18 and counts down in case of RLC of the encoder 18. The direction of rotation of the encoder 18 is detected on the basis of the phase difference between output pulses in phase A and those in phase B. Since the encoder 18 is alternately subjected to RRC and RLC, the number of pulses counted by the up-down counter 57 periodically increases and decreases to a maximum value and a minimum value respectively.

The output taken from the up-down counter 57 is fed to a sine-wave generator circuit 58, in which a sine wave conforming closely to the excitation frequency of the rotor 14 is formed on the basis of the number of pulses counted by the up-down counter 57.

The output taken from the sine-wave generator circuit 58 is fed to the multiplication circuits 56a and 56b, in which the outputs taken respectively from the vibration pickups 24a and 24b are multiplied by the sine wave formed in the sine-wave generator circuit 58. The products obtained from this multiplication point to the angular position of unbalance and give a clue to the discrimination between the component A1 (Fig. 3) and the component A1' of unbalance.

The outputs taken from the multiplication circuits 56a and 56b represent the components A1 and A2 (Fig. 6) of the unbalance respectively. In a converter 59, the unbalance vector $A_0$ existing in the balancing plane is calculated from these two components, and two signals respectively representing the amount and angular position of unbalance are outputted.

As shown in Fig. 1B, the unbalance measuring circuit for the dynamic balancing machine which allows the rotor to have only one degree of freedom has a substantially identical construction with the unbalance measuring circuit for the dynamic balancing machine which allows the rotor to have two degrees of freedom. However, as previously stated (with reference to Fig. 5), the measurement of vibration by the use of a circuit designed for one degree of freedom makes it necessary to subject the rotor 14 to the first torsional excitation in a certain angular position, revolve the rotor 14 by a certain angle of rotation (by 90° from an ideal viewpoint), and subject the rotor 14 to the second torsional excitation. In order to meet this requirement, the circuit shown in Fig. 18 is such that the output taken from the multiplication circuit 56 is temporarily stored in a memory circuit 39.

The circuits shown in Figs. 1A and 1B can not only be used in case where unbalance is measured on the basis of vibration caused by torsional excitation, but also be used in case where unbalance is measured by the conventional method, i.e., on the basis of vibration caused by the revolution of the rotor.

This is because the encoder 18 generates pulses in phase Z, which can be fed to the sine-wave generator circuit 58 so that a sine wave may be formed on the basis of these pulses. The output taken from the vibration pickup 24 (or 24a, 24b) is multiplied by the above-mentioned sine wave formed on the basis of pulses in phase Z. The product obtained from this multiplication allows the angular position of unbalance to be drawn therefrom.

Thus a choice between the measurement of unbalance by subjecting the rotor to torsional excitation and the measurement of unbalance by revolving the rotor is allowed. It is preferable to subject the rotor to torsional excitation when the rotor must be driven at a frequency nearly equal to or higher than its resonance frequency. On the other hand, when the rotor has only to be driven at a frequency lower than its resonance frequency, the rotor may be revolved as is the case with the conventional method of a dynamic balance test.

The rotor may be subjected to torsional excitation in addition to being revolved as is the case with the conventional method of a dynamic balance test. In this case, unbalance vibration is caused by revolution combined vectorially with torsional excitation. The amount and angular position of unbalance can be obtained from the analysis of this unbalance vibration.

Reference will now be specifically made to a control circuit for the driving motor 16.

Fig. 16 is a diagrammatic view of a control circuit for periodically changing the direction in which the driving torque of the driving motor 16 is exerted on the rotor.

The driving motor 16 is driven by a driver unit 91, which in turn is under the control of a servo unit 92. Angles such as ± 1°, ± 2° and ± 3°, at which the rotor is to be subjected to torsional excitation, are stored in a memory 93 and are ready for being supplied to the servo unit 92.

On receipt of an instruction about an excitation frequency, the servo unit 92 controls the driver unit 91 on the basis of the excitation frequency.

On receipt of an instruction about an angle at which the rotor is to be subjected to torsional excitation, the memory 93 recalls a pertinent one of the pieces of information stored therein and supplies it to the servo unit 92.

Consequently, on the basis of data supplied from the memory 93 on one hand, and on the basis of the instruction about the excitation frequency on the other hand, the servo unit 92 sinusoidally changes its output voltage with the lapse of time t as shown in Fig. 17. On receipt of this output voltage, the driver unit 91 excites the driving motor 16 in such a manner that the driving torque of the driving motor 16 changes in accordance with a sinusoidal change in the output voltage of the servo unit 92. Incidentally, this output voltage may take the form of a chopping wave or a saw-tooth wave instead of taking the form of a sine wave.

The encoder 18 is connected to the driving motor 16. Output pulses generated by the encoder 18 are fed back to the driver unit 91 and the servo unit 92 so that excitation may be effected by the driving motor 16 at a prescribed frequency and amplitude.

As an alternative to the foregoing, a means for driving the rotor 14 for the concomitant purpose of subjecting it to torsional excitation may be of such construction as shown in Fig. 18, in which the driving motor 16 may be an AC motor, DC motor or hydraulic motor. The driving torque of the driving motor 16 is transmitted to an intermediate shaft 100, with which the rotor 14 is coupled. The transmission of driving torque is effected through a transmitting means, which includes a first cam disk 101 fixedly connected to the rotating shaft of the driving motor 16, a second cam disk 102 fixedly connected to the intermediate shaft 100, and a coupling rod 103 by which the first cam disk is connected to the second cam disk in such a manner that she distance from the center of revolution of the first cam disk 101 to the point at which one end of the coupling rod 103 is pivotally connected to the first cam disk 101 is shorter than the distance from the center of revolution of the second cam disk 102 to the point at which the other end of the coupling rod 103 is pivotally connected to the second cam disk 102.

By taking advantage of this construction, one can excite the intermediate shaft 100 at a prescribed cycle while keeping the driving motor 16 in operation at a constant revolution speed.

The shapes of the first and second cam disks 101 and 102 may be varied or altered.

When an AC motor is used as the driving motor 16, it can be excited by an inverter circuit. It would also be advisable to adopt other control circuits.

## BRIEF DESCRIPTION OF THE DRAWINGS

Figs. 1A and 1B are block diagrams of a structural example of an unbalance measuring circuit at a dynamic balancing machine of the present invention,

Figs. 2, 3, 4, 5 and 6 are illustrations for the fundamental principle of unbalance measurement at the present invention,

Figs. 7, 8, 9, 10, 11, 12, 13, 14 and 15 each show a concrete structural example of the dynamic balancing machine of the present invention,

Figs. 16 and 17 show construction and operation of a drive motor control circuit at an embodiment of the present invention, and

Fig. 18 is a view exemplary of a driving apparatus for torsionally vibrating a rotor.

In the drawings, 14...Rotor, 16...Driving Motor, 18...Encoder, 24, 24a, 24b...Pickup

## Effect of the Invention

Although the basic construction of the conventional dynamic balancing machines is followed, the measurement of unbalance can be carried out more safely.

## Claims

(1) A dynamic balancing machine utilizing torsional vibration, characterized by including
holding means for holding a specimen in relation of being rotatable and vibratable,
drive means for torsionally vibrating within a predetermined angle said specimen held by said holding means,
Vibration detecting means for detecting unbalance vibration generated at said specimen when torsionally vibrated, said vibration detecting means detecting unbalance vibrations in at least two different angular phases with respect to the rotation direction of said specimen,
angular signal output means for outputting an angular signal each time said specimen rotates at a predetermined microangle, and
computation means for computing an unbalance angle and an unbalance amount of said specimen on the basis of said unbalance vibrations at said two different angular phases detected by said vibration detecting means and of said angular signal output from said angular signal output means.

(2) A dynamic balancing machine utilizing torsional vibration as set forth in Claim 1, wherein said vibration detecting means detects unbalance vibrations at optionally angular phases spaced at an angle of 90° from each other.

(3) A dynamic balancing machine utilizing torsional vibration as set forth in Claim 1 or 2, characterized in that said drive means has function to rotatably drive said specimen and includes function switching means which selectively switches whether said specimen is rotated or torsionally vibrated, or applies torsional vibration on said specimen while being rotated.

(4) A dynamic balancing machine utilizing torsional vibration as set forth in Claim 1 or 2, characterized in that said drive means includes
vibration frequency generating means for outputting a desired vibration frequency,
storage means for presetting a vibration angle, and
a servo output unit for changing an output into a sine waveform or a triangular waveform.

(5) A dynamic balancing machine utilizing torsional vibration as set forth in Claim 1 or 2, characterized in that said drive means includes
a rotary shaft rotatably driven,
a first cam connected to said rotary shaft,
a second cam connected to a rotary shaft of said specimen, and
a connecting member for connecting said first and second cams,
said connecting member being connected at one end thereof rotatably to said first cam at an eccentric position apart from the axis of rotation of said first cam at a first distance and at the other end rotatably to said second cam at an eccentric position apart from the axis of rotation of said second cam at a second distance larger than said first distance.

(6) A dynamic balancing machine utilizing torsional vibration as set forth in Claim 1, 2, 3, 4 or 5, characterized in that said drive means includes a hydraulic motor.

## Fig. 1A

## Fig. 1B

# Fig. 2

# Fig. 3

# Fig. 4

Counter Circuit

Fig. 5

Output of Pick-up

B1

A1

A1'

Fig. 6

A0
A1
A2
B1
B2
PU 1
PU 2

Fig. 7

14
18
16
18
12
11
13
15
10

Fig. 8

Fig. 9

Fig. 10

Fig. 11

*Fig.* 12

*Fig.* 13

Fig. 14

Fig. 15

Fig. 16

Exciting-Frequency
Command

Servo Unit    92        91        16        18

M        E

Driver Unit

Exciting-Angle
Command

93

Angle-Control Memory

Fig. 17

3°

3°

t

Fig. 18

102

103

101

102

103    101

Rotor

100        18

16

16